## Europäisches Patentamt

(19) **European Patent Office**

**Office européen des brevets**

(11) Numéro de publication: **0 135 405 B1**

(12) # FASCICULE DE BREVET EUROPEEN

(45) Date de publication du fascicule du brevet:
20.04.88

(51) Int. Cl.⁴: **H 04 N 7/13**

(21) Numéro de dépôt: **84401412.6**

(22) Date de dépôt: **03.07.84**

(54) **Procédé et dispositif de détection de points en mouvement dans une image de télévision pour systèmes de télévision numérique de compression de débit à rafraîchissement conditionnel.**

(30) Priorité: **13.07.83 FR 8311736**

(43) Date de publication de la demande:
**27.03.85 Bulletin 85/13**

(45) Mention de la délivrance du brevet:
**20.04.88 Bulletin 88/16**

(84) Etats contractants désignés:
**DE GB**

(56) Documents cités:
**DE - A - 3 029 190**
**US - A - 3 984 626**

**FREQUENZ, vol. 33, no. 1, janvier 1979, pages 2-8, Berlin, DE; G. BOSTELMANN: "Ein Codec für Bildfernsprechsignale mit subjektiv optimiertem Bewegungsdetektor"**
**NACHRICHTENTECHNISCHE ZEITSCHRIFT, vol. 30, no. 3, mars 1977, pages 245-250, Berlin, DE; H. WENDT: "Schmalband-Codierung"**
**WIRELESS WORLD, vol. 78, no. 1441, juillet 1972, pages 320-324, Haywards Heath, GB; "Reshaping Information to suit the channel"**

(73) Titulaire: **THOMSON-CSF, 173, Boulevard Haussmann, F-75379 Paris Cédex 08 (FR)**

(72) Inventeur: **Catros, Jean-Yves, THOMSON-CSF SCPI 173, bld Haussmann, F-75379 Paris Cedex 08 (FR)**

(74) Mandataire: **Lincot, Georges et al, THOMSON-CSF SCPI 19, avenue de Messine, F-75008 Paris (FR)**

ACTORUM AG

## Description

L'invention concerne un procédé et un dispositif de détection de points en mouvement dans une image pour systèmes de télévision numérique de compression de débit à rafraîchissement conditionnel selon lesquels les images reçues ne sont mises à jour ou rafraîchies que pour les points significatifs de l'image qui sont en mouvement.

Des procédés de détection de points en mouvement dans une image pour comprimer le débit binaire d'images de télévision codées entre émetteurs et récepteurs sont connus et consistent, pour la plupart, à sélectionner des informations relatives au points d'image qui ont changé d'une quantité appréciable d'une image à la suivante, en vue de les transmettre sur le canal de transmission reliant l'émetteur aux différents récepteurs de télévision.

Les dispositifs de détection de mouvements, encore appelés détecteurs de mouvement, qui font application des procédés précités sont également bien connus et un mode de réalisation est par exemple décrit dans la revue Frequenz Vol. 33 n° 1, janvier 1979 pages 2–8 dans l'article intitulé «Ein Codec für Bildfernsprechsignale mit subjektiv optiertem Bewegungsdetektor». Ceux-ci réalisent pour chaque image de télévision à coder la segmentation entre les zones fixes et en mouvement de l'image.

En principe, une comparaison de la différence de la luminance inter-image de deux points homologues à un simple seuil est suffisante pour séparer les deux types de zones. Cependant, en pratique, la séparation s'avère imparfaite à cause, d'une part, du bruit d'origine analogique ou numérique qui est toujours présent dans une séquence d'image et qui entraîne des confusions sur l'état statique ou mobile des points de l'image et d'autre part, des contraintes en débit imposées sur le canal de transmission.

La difficulté provient du fait que l'on ne peut pas, en agissant sur le réglage du simple seuil de détection des détecteurs de mouvement existants obtenir à la fois un bon rendu des zones en mouvement et un débit faible sur le canal de transmission. En effet, en augmentant le seuil de détection pour ne pas détecter le bruit de fond, on obtient des zones en mouvement mal rendues au niveau des récepteurs alors qu'en diminuant le seuil de détection pour restituer correctement les mouvements de l'image on laisse passer de plus en plus de bruit de fond en augmentant par voie de conséquence le débit binaire des informations ou données transmises.

L'invention a pour but de pallier les inconvénients précités.

A cet effet, l'invention a pour objet un procédé de détection de points en mouvement dans une image de télévision pour systèmes de télévision numérique de compression de débit à rafraîchissement conditionnel, caractérisé en ce qu'il consiste à décomposer l'image en blocs de N x M points, les points d'un bloc étant situés aux intersections de N lignes et de M colonnes de l'image, à mesurer les différences inter-image des valeurs de luminance et de chrominance de chaque point de chaque bloc de N x M points pour optenir N x M différences inter-image pour chaque bloc de N x M points, à transformer les N x M différences inter-image des valeurs de luminance et/ou de chrominance correspondantes en N x M coefficients à l'aide d'une transformation orthogonale, à comparer les valeurs absolues des coefficients obtenus à un ou plusieurs seuils de référence prédéterminés pour déclarer en mouvement les points placés au milieu d'un bloc lorsque la valeur absolue d'au moins un coefficient obtenu par cette transformation est supérieure à au moins un seuil de référence prédéterminé.

L'invention a également pour objet un dispositif pour la mise en oeuvre de procédé précité.

Le procédé et le dispositif selon l'invention ont pour principal avantage qu'ils permettent un meilleur rendu des zones en mouvement tout en assurant un bon filtrage du bruit dans les zones uniformes. Ces objectifs sont principalement atteints grâce au fait que la décision de mouvement ne dépend plus seulement de la différence inter-image au point considéré mais également des différences inter-image au voisinage de ce point. L'algorithme de décision étant élaboré en utilisant le fait que les coefficients de la transformation considérée donne une idée de la répartition des fréquences ce qui permet ainsi une meilleure détection du mouvement du fait de l'élimination du bruit lorsque les coefficients sont inférieurs à des valeurs de seuils prédéterminées.

D'autres caractéristiques et avantages de l'invention apparaîtront également à l'aide de la description faite au regard des dessins annexés donnés uniquement à titre d'exemple et dans lesquels:

la fig. 1 représente un schéma synoptique général d'un système de transmission d'image de télévision de compression de débit à rafraîchissement conditionnel;

la fig. 2 est un schéma de principe du détecteur de mouvement selon l'invention;

la fig. 3 représente de façon détaillée un mode de réalisation de détecteur de mouvement selon l'invention.

Pour ne pas détecter de bruit de fond dans les zones à contours ou à texture de l'image, le procédé selon l'invention consiste, dans une première étape, à décomposer l'image en blocs de N x M points, les blocs consécutifs pouvant éventuellement se recouvrir partiellement, les points d'un bloc étant situés aux intersections de N lignes et M colonnes de l'image, à mesurer les différences inter-images $d_n$ des valeurs de luminance et/ou de chrominance de chaque point d'un bloc d'image et à appliquer sur chaque bloc N x M différence inter-image ainsi crée, une transformation orthogonale telle que décrite dans la publication intitulée «considération sur le choix des transformations orthogonales et sur leurs perspectives» par Henri BUCCHI Revue Acta Electronica 19.4. 1976/299–332, qui permet d'obtenir des coefficients dont l'intensité est fonction de la fréquence spatiale de variation des caractéristiques de luminance et ou de chrominance des points situés au voisinage des points courants analysés et qui permet, comme les manifestations dues au bruit sont généralement de fréquences plus hautes que les fréquences de variation des points en mouvement, de faire une sélections entre les points dûs au bruit de fond et ceux dûs à des déplacements réels dans l'image. Ainsi à chaque point $P_n$, $P_{n+1}$, $P_{n+2}$, $P_{n+3}$ placés par exemple sur une même ligne de l'image, le procédé selon l'invention détecte dans une première étape les différences inter-image $d_n$, $d_{n+1}$, $d_{n+2}$, $d_{n+3}$, et calcule en fonction des valeurs des différences inter-images ainsi obtenues des coefficients $C_n$, $C_{n+1}$, $C_{n+2}$, et $C_{n+3}$, résultant d'une transformée de HADAMARD monodimentionnelle de taille 1 x 4 du type de celle décrite dans le brevet US 3 984 626 mais que est appliqué à un procédé différent de codage DPCM. On a alors,

$$C_n = d_n + d_{n+1} + d_{n+2} + d_{n+3} \qquad (1)$$
$$C_{n+1} = d_n + d_{n+1} - d_{n+2} - d_{n+3} \qquad (2)$$
$$C_{n+2} = d_n - d_{n+1} - d_{n+2} + d_{n+3} \qquad (3)$$
$$C_{n+3} = -d_n + d_{n+1} - d_{n+2} + d_{n+3} \qquad (4)$$

Le mouvement pour les points $P_{n+1}$ et $P_{n+2}$ est alors détecté lorsque la valeur absolue de l'un quelconque des coefficients $C_n$ à $C_{n+3}$ est supérieure à un seuil de comparaison de référence prédéterminé noté respectivement $S_1$ à $S_4$. Pour tenir compte du fait que le bruit a généralement une fréquence spatiale plus haute que la fréquence spatiale d'un point d'image en mouvement, les valeurs des seuils $S_1$ à $S_4$ sont de préférence ajustées de façon croissante dans l'ordre croissant des indices n à n+3. Par exemple en fixant le seuil $S_1$ à la valeur 12, les seuils $S_2$ à $S_4$ pourront être réglés aux valeurs $S_2 = 20$, $S_3 = 28$ et $S_4 = 255$.

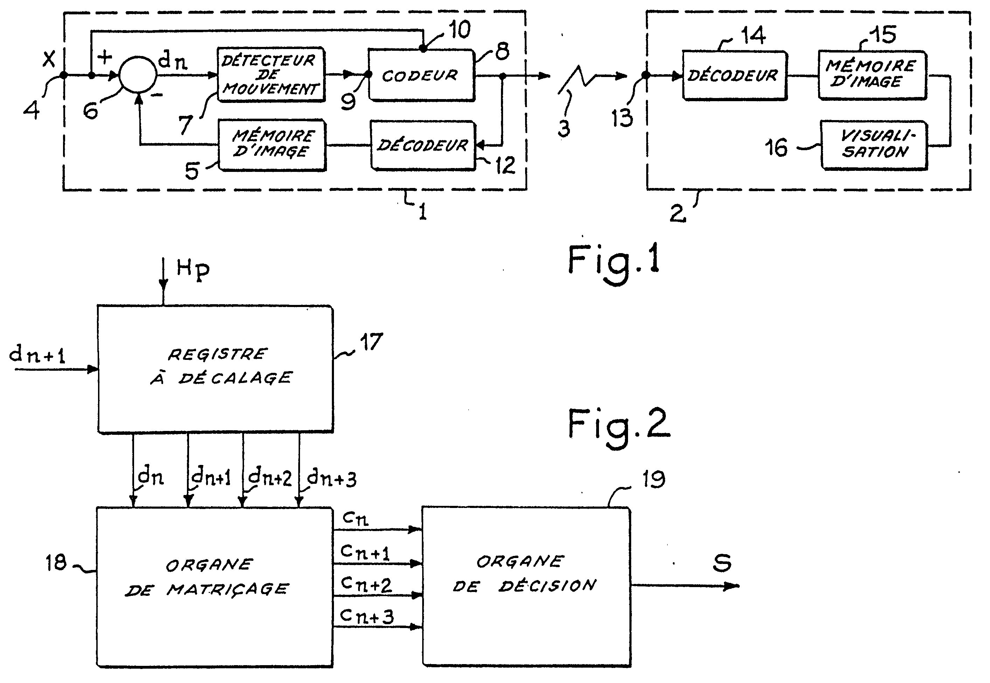

Un système de transmission d'image de télévision à compression de débit à rafraîchissement conditionnel faisant application du procédé selon l'invention est représenté à la figure 1. Il comprend de façon connue une partie émission 1, une partie réception 2, reliées entre elles par un canal de transmission 3. La partie émission 1 comprend, une entrée 4 sur laquelle sont appliqués les échantillons de signaux vidéo fournis par une caméra de télévision extérieure au système, non représentée, une mémoire d'image 5, un soustracteur 6 des échantillons appliqués sur l'entrée 4 aux échantillons par la mémoire 5, un détecteur de mouvement 7 couplé par son entrée et la sortie du soustracteur 6, un codeur 8 couplé respectivement par ses entrées 9 et 10, d'une part, à la sortie du détecteur de mouvement 7 et d'autre part, à l'entrée 4 de la partie émission 1 et couplé par sa sortie au canal de transmission 3, ainsi qu'un décodeur 12 couplé par son entrée à la sortie du codeur 8 et couplé par sa sortie à la mémoire d'image 5. La partie réception 2 est couplée par son entrée 13 au canal de transmission 3 et comprend un décodeur 14 et une mémoire d'image 15 reliés en série entre le point d'entrée 13 et un dispositif de visualisation 16.

Le système représenté à la figure 1 permet, grâce au soustracteur 6 d'évaluer la différence inter-image $d_n$ de l'information de luminance et/ou de chrominance accompagnant chaque point d'image $P_n$ à coder et d'appliquer cette différence à l'entrée du détecteur de mouvement 7 qui décide quels sont les points de l'image qui doivent être déclarés comme ayant changés d'une image à l'autre. Le codeur 8, sous le contrôle du détecteur de mouvement, calcule, pour les points qui ont changé, une information codée de luminance et d'adresse qu'il transmet, de façon connue, au moyen d'un organe d'émission, non représenté, sur le canal de transmission 3. A la réception les éléments binaires données de luminance et d'adresse sont décodés par le décodeur 14 puis, sont transmis à l'intérieur de la mémoire d'image 15 pour rafraîchir l'image qui a été précédemment stockée dans cette mémoire. Le décodeur 12 de la partie émission permet de disposer côté émetteur de la même information que l'information décodée par le décodeur 14 au récepteur et de rafraîchir l'image précédente qui a été stockée également dans la mémoire d'image 5 de la partie émission de sorte que, en l'absence d'erreur, les mémoires d'image 5 et 14 disposent au même moment de la même image codée sous une forme binaire.

Un schéma de principe du détecteur de mouvement 7 selon l'invention est représenté à la figure 2. Le détecteur de mouvement représenté à la figure 2 comprend un ensemble de registres à décalage 17, un organe de matriçage 18, et un organe de décision 19. Le registre à décalage 17 reçoit sur une première entrée la différence inter-image $d_n$ du point $P_n$ de l'image et est synchronisée sur une deuxième entrée par l'horloge point du dispositif. Le registre à décalage 17 permet de garder en mémoire les différences inter-image $d_n$, $d_{n+1}$ à $d_{n+3}$ obtenues à la sortie du soustracteur 6 de la figure 1, en vue de leur transmission à l'organe de matriçage 18. L'organe de matriçage 18 est constitué par un ensemble de circuits logiques formés d'additionneurs et de soustracteurs qui permettent à partir des informations de différences inter-images $d_n$ à $d_{n+3}$ de calculer les coefficients $C_n$ à $C_{n+3}$ en utilisant la transformation de HADAMARD décrite précédemment. Les coefficients $C_n$ à $C_{n+3}$ obtenus à la sortie de l'organe de matriçage sont appliqués respectivement à l'entrée de l'organe de décision 19 qui fournit sur sa sortie un signal S indicatif de l'état en mouvement ou statique des points centraux $P_{n+1}$, $P_{n+2}$.

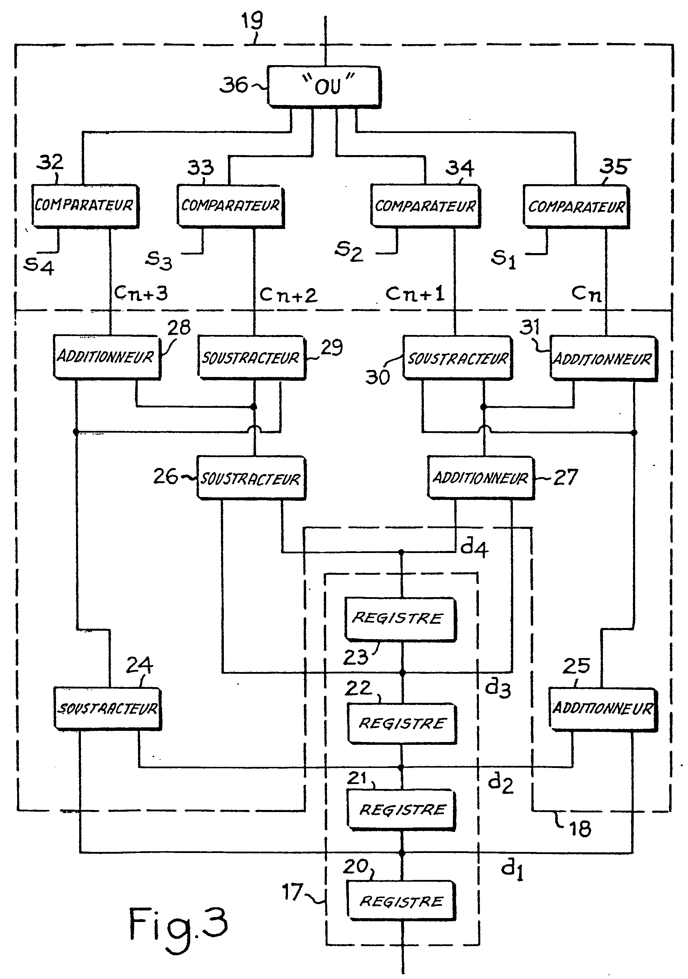

Un exemple de réalisation détaillé d'un détecteur de mouvement selon l'invention est maintenant décrit à l'aide de la figure 3 où les détails de réalisation de l'ensemble de registres à décalage 17 de l'organe de filtrage 18 et de l'organe de décision 19 sont figurés à l'intérieur de lignes en pointillés. L'ensemble de registres à décalage 17 est formé de quatre registres 20, 21, 22, 23 reliés en série et ayant chacun une capacité de neuf éléments binaires pour pouvoir mémoriser les différences inter-images de points successifs d'une même ligne d'image qui sont appliqués à l'entrée du détecteur de mouvement. Pour un ensemble de points $P_n$ à $P_{n+3}$ formant un bloc d'image de dimension 1 x 4 respectivement analysés sur une même ligne d'image, l'ensemble des registres 17 contient respectivement, dans le registre 23 la différence inter-image $d_n$, dans le registre 22 la différence inter-image $d_{n+1}$, dans le registre 21 la différence inter-image $d_{n+2}$, et dans le registre 20 la différence inter-image $d_{n+3}$. L'organe de matriçage 18 est constitué par un ensemble d'opérateurs notés respectivement 24 à 31 reliés ensemble de façon à calculer les coefficients $C_n$ à $C_{n+3}$ suivant le procédé précédemment décrit. L'opérateur 24 est un soustracteur qui est relié par ses entrées respectivement aux sorties des registres 20 et 21 et qui opère par conséquent la différence entre les différences inter-images $d_{n+3}$ et $d_{n+2}$. L'opérateur 25 est un additionneur qui est relié par ses entrées aux sorties des registres 20 et 21 pour effectuer l'addition des différences inter-images $d_{n+2}$ et $d_{n+3}$ mémorisées à l'intérieur des registres 20 et 21. L'opérateur 26 est un soustracteur qui est relié par ses entrées aux sorties des registres 22 et 23 et qui opère la différence entre les différences inter-images $d_n$ et $d_{n+1}$. Enfin l'opérateur 27 est un additionneur qui est relié par ses entrées aux sorties des registres 22 et 23 et qui opère l'addition des différences inter-images $d_n$ et $d_{n+1}$. Les sorties des additionneurs 25 et 27 sont reliées respectivement aux entrées de l'opérateur 28, formé par un additionneur, qui additionne les mots binaires transmis par les additionneurs 25 et 27. L'additionneur 28 fournit sur sa sortie le coefficient $C_n$ qui représente la somme des différences inter-images $d_n$ à $d_{n+3}$ suivant la relation (1) précédemment décrite. Les sorties des additionneurs 25 et 27 sont également reliées aux entrées respectives de l'opérateur 29 fourni par un soustracteur qui soustrait les mots binaires transmis par les additionneurs 25 et 27 pour fournir sur sa sortie le mot binaire correspondant au coefficient $C_{n+1}$ suivant la relation

$$C_{n+1} = (d_n + d_{n+1}) - (d_{n+2} + d_{n+3})$$

équivalente à la relation (2) précédemment décrite.

Les opérateurs 30 et 31 sont formés respectivement par un additionneur et par un soustracteur, l'opérateur 30 ayant une première entrée reliée à la sortie de l'opérateur 24, une deuxième entrée reliée à la sortie de l'opérateur 26. L'opérateur 31 a une première entrée reliée à la sortie de l'opérateur 24 et une deuxième entrée reliée à la sortie de l'opérateur 26. La sortie de l'opérateur 29 fournit le coefficient $C_{n+2}$ calculé suivant la relation

$$C_{n+2} = (d_{n+3} - d_{n+2}) - (d_{n+1} - d_n)$$

équivalente à la relation (3) précédemment décrite.

La sortie de l'opérateur 28 fournit le coefficient $C_{n+3}$ suivant la relation

$$C_{n+3} = (d_{n+3} - d_{n+2}) + (d_{n+1} - d_n)$$

équivalente à la relation (4) précédemment décrite.

L'organe de décision 19 est constitué par l'ensemble des comparateurs 32 à 35 reliés par leurs sorties respectivement aux entrées d'un circuit OU 36. L'ensemble des comparateurs 32 à 35 compare la valeur absolue des coefficients $C_n$ à $C_{n+3}$ obtenus à la sortie des opérateurs 28 à 31 à des seuils respectifs notés $S_1$ à $S_4$. Les valeurs de seuil $S_1$ à $S_4$ sont appliquées respectivement sur une première entrée des comparateurs 35 à 32 dont les deuxièmes entrées sont respectivement reliées à la sortie correspondante d'un opérateur 28 à 31. La décision de point en mouvement est fournie par la sortie du circuit OU 36 qui délivre un signal de niveau 1 logique lorsqu'au moins un coefficient $C_n$ à $C_{n+3}$ fourni à la sortie des opérateurs 28 à 31 est supérieur à la valeur du seuil $S_1$ ou $S_4$ qui lui correspond.

Bien que le principe de la présente invention ait été décrit cidessus en relation avec un exemple particulier de réalisation il faut comprendre que la description n'a été faite qu'à titre d'exemple et ne limite pas la portée de l'invention.

D'autres variantes de réalisation sont en effet possibles. En particulier, le procédé selon l'invention pourra être étendu à des blocs de différences inter-image bidimentionnels qui au lieu d'être formés par des matrices de 1 x 4 pourront être formés par exemple par des matrices carrés de $2^q$ x $2^q$ avec $q \geqslant 1$ de sorte que le mouvement soit détecté pour les 4 points centraux de la matrice.

On concevra également que d'autres lois de décision à partir des coefficients calculés par le procédé suivant l'invention peuvent être envisagées sans sortir du cadre de l'invention et que l'on pourra tout aussi bien pour effectuer une décision, faire par exemple une combinaison linéaire des valeurs absolues des coefficients obtenus par la transformation orthogonale et comparer le résultat de cette combinaison à un seuil unique de référence prédéterminé pour déclarer en mouvement les points placés au milieu du bloc sur lequel a eu lieu le calcul des coefficients lorsque le résultat de la combinaison est supérieur au seuil de référence prédéterminé.

**Revendications**

1. Procédé de détection de points en mouvement dans une image de télévision pour systèmes de télévision numérique de compression de débit à rafraîchissement conditionnel, caractérisé en ce qu'il consiste à décomposer l'image en blocs de N x M points, les points d'un bloc étant situés aux intersections de N lignes et de M colonnes de l'image, à mesurer les différences inter-image des valeurs de luminance et de chrominance de chaque point de chaque bloc de N x M points pour obtenir N x M différences inter-image pour chaque bloc de N x M points, à transformer les N x M différences inter-image des valeurs de luminance et/ou de chrominance correspondantes en N x M coefficients à l'aide d'une transformation orthogonale, à comparer les valeurs absolues des coefficients obtenus à un ou plusieurs seuils de référence prédéterminés pour déclarer en mouvement les points placés au milieu d'un bloc lorsque la valeur absolue d'au moins un coefficient obtenu par cette transformation est supérieure à au moins un seuil de référence prédéterminé.

2. Procédé selon la revendication 1, caractérisé en ce que la dimension d'un bloc est monodimentionelle et est composée de points situés sur une même ligne ou sur une même colonne.

3. Procédé selon la revendication 1, caractérisé en ce que la dimension d'un bloc est bidimentionnelle et est composée d'une matrice carrée de points situés aux intersections de M lignes et M colonnes, M étant une puissance de 2, telle que $M = 2^q$ où q est un entier positif plus grand que 1.

4. Procédé selon l'une quelconque des revendications 1 à 3, caractérisé en ce que les valeurs des seuils sont choisies croissantes avec l'ordre des coefficients classées suivant les fréquences spatiales croissantes.

5. Procédé selon l'une quelconque des revendications 1 à 3, caractérisé en ce qu'il consiste à effectuer une combinaison linéaire des valeurs absolues des coefficients obtenus par une transformation orthogonale pour comparer le résultat de cette combinaison à un seuil unique de référence prédéterminé pour déclarer en mouvement les points placés au milieu d'un bloc lorsque le résultat de la combinaison linéaire est supérieur au seuil de référence prédéterminé.

6. Dispositif de détection de mouvement pour la mise en oeuvre du procédé selon l'une quelconque des revendications 1 à 5, caractérisé en ce qu'il comprend un ensemble de registres à décalage (17), pour stocker en mémoire les différences inter-image des luminances et/ou des chrominances des points de chaque bloc d'image, un organe de matriçage (18), couplé à l'ensemble de registres à décalage (17) et agencé de façon à calculer des coefficients en effectuant une transformation de HADAMARD sur les différences inter-image des points de l'image, ainsi qu'un organe de décision (19) qui décide en fonction des valeurs des coefficients obtenus l'état en mouvement ou statique des points placés au milieu de chaque bloc analysé.

7. Utilisation du procédé et du dispositif selon l'une quelconque des revendications 1 à 4 à la détection de mouvement dans les systèmes de télévision numérique de compression de débit à rafraîchissement conditionnel.

8. Utilisation du dispositif de détection de mouvement selon la revendication 7 pour des appareils de réduction de bruit dans une séquence d'images animées.

## Patentansprüche

1. Verfahren zur Erfassung von bewegten Punkten in einem Fernsehbild für digitale Fernsehsysteme, die mit Kompression des Datendurchsatzes und bedingter Aktualisierung arbeiten, dadurch gekennzeichnet, dass es darin besteht, das Bild in Blöcke aus N x M Punkten zu zerlegen, wobei die Punkte eines Blockes an den Schnittpunkten der N Zeilen und M Spalten des Bildes liegen, die zwischen den Bildern vorhandenen Differenzen der Luminanzwerte und der Chrominanzwerte jedes Punktes jedes Blocks aus N x M Punkten zu messen, um N x M zwischen den Bildern vorhandene Differenzen für jeden Block aus N x M Punkten zu erhalten, die entsprechenden zwischen den Bildern vorhandenen N x M Differenzen der Luminanzwerte und/oder Chrominanzwerte in N x M Koeffizienten mittels einer orthogonalen Transformation umzusetzen, und die Absolutwerte der erhaltenen Koeffizienten mit einem oder mehreren vorbestimmten Referenz-Schwellwerten zu vergleichen, um als bewegte Punkte diejenigen Punkte zu erklären, welche in der Mitte eines Blocks liegen, wenn der Absolutwert wenigstens eines durch diese Transformation erhaltenen Koeffizienten grösser als wenigstens ein vorbestimmter Referenz-Schwellwert ist.

2. Verfahren nach Anspruch 1, dadurch gekennzeichnet, dass die Dimension eines Blocks eindimensional ist und zusammengesetzt ist aus Punkten, die auf derselben Zeile oder in derselben Spalte liegen.

3. Verfahren nach Anspruch 1, dadurch gekennzeichnet, dass die Dimension eines Blocks zweidimensional ist und er zusammengesetzt ist aus einer quadratischen Matrix von Punkten, die an den Schnittstellen von M Zeilen und M Spalten liegen, worin M eine solche Potenz von 2 ist, dass $M = 2^q$ ist, worin q eine ganze positive Zahl grösser als 1 ist.

4. Verfahren nach einem der Ansprüche 1 bis 3, dadurch gekennzeichnet, dass die Schwellwerte mit der Ordnungszahl der Koeffizienten entsprechend den zunehmenden räumlichen Frequenzen ansteigend gewählt sind.

5. Verfahren nach einem der Ansprüche 1 bis 3, dadurch gekennzeichnet, dass es darin besteht, eine lineare Kombination der Absolutwerte der Koeffizienten durchzuführen, welche durch eine orthologische Transformation erhalten werden, um das Ergebnis dieser Kombination mit einem einzigen vorbestimmten Referenzschwellwert zu vergleichen und diejenigen Punkte als bewegte Punkte zu erklären, welche in der Mitte eines Blocks liegen, wenn das Ergebnis der Linearkombination grösser als der vorbestimmte Referenzschwellwert ist.

6. Vorrichtung zur Bewegungserfassung für die Durchführung des Verfahrens nach einem der Ansprüche 1 bis 5, dadurch gekennzeichnet, dass sie eine Gruppe von Schieberegistern (17) enthält, um die zwischen den Bildern vorhandenen Luminanz- und/oder Chrominanz-Differenzen der Punkte jedes Bildblocks zu speichern, ein Matrixbildungselement (18) enthält, welches an die Gruppe von Schieberegistern (17) angekoppelt ist und so ausgebildet ist, dass Koeffizienten berechnet werden, indem eine HADAMARD-Transformation auf die zwischen den Bildern vorhandenen Differenzen der Bildpunkte angewendet wird, und ein Entscheidungsorgan (19) enthält, welches in Abhängigkeit von den Werten der erhaltenen Koeffizienten den Bewegungszustand oder statischen Zustand der Punkte entscheidet, welche in der Mitte jedes analysierten Blocks liegen.

7. Anwendung des Verfahrens und der Vorrichtung nach einem der Ansprüche 1 bis 4 zur Bewegungserfassung in digitalen Fernsehsystemen mit Kompression des Datendurchsatzes und bedingter Aktualisierung.

8. Anwendung der Bewegungserfassungsvorrichtung nach Anspruch 7 für Geräte zur Rauschunterdrückung in einer Folge von bewegten Bildern.

**Claims**

1. Method of detecting moving points in a television image for digital television systems using a flow rate compression with conditional updating, characterized in that it consists in decomposing the image into blocks of N x M points, the points of one block being located at the intersections of N lines and of M column of the image, measuring the inter-image differences of the luminance values and chrominance values of each point of each block of N x M points to obtain N x M inter-image differences for each block of N x M points, transforming the N x M inter-image differences of the corresponding luminance and/or chrominance values into N x M coefficients by means of an orthogonal transformation, comparing the absolute values of the obtained coefficients with one or a plurality of predetermined reference thresholds to declare that those points are moving points which are located in the center of a block when the absolute value of at least one coefficient obtained by this transformation exceeds al least one predetermined reference threshold.

2. Method according to claim 1, characterized in that the dimension of one block is one-dimensional and is composed of points located on the same line or on the same column.

3. Method according to claim 1, characterized in that the dimension of a block is two-dimensional and is composed of a square matrix of points located on the intersections of M lines and M columns, M being a power of 2, such that $M = 2^q$, wherein q is a positive integer exceeding 1.

4. Method according to any of claims 1 to 3, characterized in that the threshold values are selected to increase with the order of coefficients classified according to the increasing special frequencies.

5. Method according to any of claims 1 to 3, characterized in that it consists in performing a linear combination of the absolute values of the coefficient obtained by an orthogonal transformation to compare the result of this combination to single predetermined reference threshold to declare as moving points those points located at the center of a block when the result of the linear combination exceeds the predetermined reference threshold.

6. Movement detection device for performing the method according to any of claims 1 to 5, characterized in that it comprises a set of shift registers (17) for storing and memorizing the inter-image differences of the luminances and/or the chrominances of the points of each image block, a matrix-forming member (18) coupled to the set of shift registers (17) and arranged in a manner to compute coefficients by performing a HADAMARD transformation on the inter-image differences of the image points, as well as a decision member (19) which decides as a function of the values of the obtained coefficients the moving or static state of the points located at the center of each analyzed block.

7. Use of the method and of the device according to any of claims 1 to 4 for the detection of movement in digital television systems using flow rate with conditional updating.

8. Use of the movement detection device according to claim 7 for noise reduction devices used for noise reduction in a moving image sequence.

Fig.1

Fig.2

0 135 405

Fig.3